# EUROPÄISCHE PATENTANMELDUNG

(11) **EP 2 793 384 A1**
(43) Veröffentlichungstag der Anmeldung: **22.10.2014**
(21) Anmeldenummer: 13163705.0
(22) Anmeldetag: 15.04.2013
(51) Int. Cl.: H02M 1/32, H02M 3/158

(54) **Umrichtermodul**

(71) Anmelder: Siemens Aktiengesellschaft, 80333 München (DE)
(72) Erfinder: Viertler, Rainer, 85591 Vaterstetten (DE)

(57) **Zusammenfassung**

Die Erfindung betrifft ein Umrichtermodul (1) mit mindestens einem Moduleingang (4) zum Anschluss einer Gleichstromquelle (2) oder einer Wechselstromquelle (3) und mit einem Modulausgang (18) zum Anschluss einer Stromsenke, mit mindestens einem ersten Maximum-Power-Point-Steller (9), der zur Steuerung sowohl einer eingangsseitig eingespeisten Gleichspannung als auch einer eingangsseitig eingespeisten gleichgerichtete Wechselspannung zwischen einem Hochsetzstellermodus und einem Choppermodus umschaltbar ist, mit einer Wechselrichterstufe (12), welche die eingespeiste Gleichspannung in eine Wechselspannung umsetzt, sowie mit einer Steuereinheit (13) zur Steuerung der Wechselrichterstufe (12) und des Maximum-Power-Point-Stellers (9).

## Beschreibung

Die Erfindung betrifft ein Umrichtermodul, insbesondere für eine Photovoltaikanlage und/oder eine Wind- und Wasserkraftanlage, mit mindestens einem Moduleingang zum Anschluss einer Gleichstromquelle oder einer Wechselstromquelle und mit einem Modulausgang zum Anschluss einer Stromsenke, insbesondere an ein Energieverteilungsnetz.

Um regenerative Energie nutzen zu können, werden zusätzlich zu stromerzeugenden Elementen (Generatoren) auch Geräte benötigt, die die Energie geeignet in das öffentliche Netz einspeisen. Diese Geräte werden als Umrichter, Wechselrichter oder Inverter bezeichnet. In Photovoltaikanlagen (PV-Anlagen) und in Wind- bzw. Wasserkraftanlagen werden üblicherweise jeweils unterschiedliche Umrichter eingesetzt. Insbesondere zur kostentechnisch möglichst effektiven Handhabung der genannten Unterschiede in den Energiearten werden bisher unterschiedliche Umrichter entwickelt, die lediglich auf den jeweiligen Generatortyp abgestimmt sind.

PV-Umrichter können eingangsseitig mit einem DC/DC-Wandler (Step-Up-Wandler) ausgerüstet sein, der die Eingangsspannung aus den PV-Feldern in eine höhere Spannung umsetzt. Um ein PV-Feld dynamisch am sogenannten MPP (Maximum Power Point) zu betreiben, wird eine als MPP-Steller bezeichnete Funktionseinheit innerhalb des PV-Umrichters eingesetzt.

MPP-Steller messen die Eingangsspannung und den Eingangsstrom, berechnen daraus die Eingangsleistung und steuern über eine Steuereinrichtung (Control Unit) in den DC/DC-Wandlern vorgesehene Leistungsschalter. Der Ablauf einer MPP-Regelung wird üblicherweise durch die sogenannte Firmware in der Steuereinheit bestimmt. Diese Steuereinheit (Control Unit) wird üblicherweise als Microcontroller oder digitaler Signalprozessor ausgeführt. Während Regelungsalgorithmen die Leistungselektronik steuern, regelt eine Ablaufsteuerung die Funktion des gesamten Gerätes. Zweckmäßigerweise werden mehrere MPP-Steller eingesetzt, wenn mehrere PV-Felder unterschiedlich ausgerichtet oder unterschiedlich verschaltet sind.

Bei Wind- und Wasserkraftanlagen sind unterschiedliche Energieumwandlungen möglich. Je nach Leistungsklasse kommen verschiedene technische Ausführungen von Umrichtern zum Einsatz. Große Windräder oberhalb einer Leistungsklasse von ca. 100KW weisen einen speziellen Generator auf, welcher Energie mittels zusätzlicher Leistungselektronik direkt in das öffentliche Netz einspeist. Hierbei werden doppelt gespeiste Asynchronmaschinen als Energiequelle für das öffentliche Netz verwendet.

Bei kleineren Leistungen (ca. 5KW bis 50KW) wandelt ein aktiv geregelter oder ein ungeregelter Brückengleichrichter (in B4- oder B6-Schaltung) die Wechselspannung in eine pulsierende Gleichspannung um. Ein DC/DC-Wandler (Step-Up-Wandler) setzt diese Gleichspannung in eine höhere Gleichspannung um. Ein nachgeschaltetes Wechselrichtermodul, z. B. in B6C-oder NPC-Schaltung oder ein Matrix-Inverter, erzeugt daraus eine stromgeregelt stabilisierte Wechselspannung für die Einspeisung in das öffentliche Netz (Verbundnetz).

Bei Umrichtern für gleichgerichtete Wechselspannungen aus drehenden Generatoren erfolgt die Regelung der Ausgangsleistung über die Spannungshöhe am Eingang des DC/DC-Wandlers. Typischerweise kann durch eine Spannungs-Leistungs-Zuordnung (U- zu P- Zuordnung) eine Anpassung des Generators an die Ausgangsleistung des DC/DC-Wandlers und/oder nachgeschalteter Wechselrichtereinheit (Inverter) erfolgen.

Kritisch ist bei sich drehenden Generatoren eine spontan fehlende Belastung. Dies kann beispielsweise durch eine Abschaltung des Inverters erfolgen, wenn dieser einen Netzfehler (Frequenzfehler, Impedanzfehler, Phasenausfall oder dergleichen), eine Störung im Umrichter und/oder eine Störungen durch den Generator feststellt.

Während die Induktivitäten in den Generatoren gemäß der Lenz'schen Regel den Strom weiter in die Last (Umrichter) treiben, würde bei fehlender Last die Eingangsspannung am Umrichter sprunghaft ansteigen. Um solche sprunghaften Spannungsanstiege zu beherrschen, sind Schutzbeschaltungen oder Eingangsschaltungen vorgesehen, die auch als Chopperschaltungen bezeichnet werden. Diese begrenzen bei Umrichtern für Wind- und Wasserkraftanlagen die Eingangsspannung an den DC/DC-Wandlern (Step-Up-Wandlern) auf eine für die Leistungshalbleiter zulässige Maximalspannung. Derartige Chopperschaltungen schalten Lastwiderstände in den Eingangskreis und übernehmen bis zur Absenkung der Erregung des Generators oder bis zur anderweitigen Generatorabschaltung die überschüssige Energie.

Bisher werden Geräte speziell für den jeweiligen Anwendungsfall (Windwechselrichter-Wasserkraft-Wechselrichter oder PV-Wechselrichter) entwickelt und betrieben, was mit hohen Kosten verbunden ist.

Der Erfindung liegt die Aufgabe zugrunde, ein Umrichtermodul bereitzustellen, welches eine alternative und eine gemeinsame Nutzung von Photovoltaikanlagen und Wind- oder Wasserkraftanlagen als Stromquelle ermöglicht. Dabei sollen insbesondere externe Schutzbeschaltung oder ein externer Eingangs-Chopper vermieden werden.

Diese Aufgabe wird erfindungsgemäß gelöst durch die Merkmale des Anspruches 1. Vorteilhafte Ausgestaltungen sind in den Unteransprüchen angegeben.

Hierzu ist ein Umrichtermodul mit Moduleingängen zum Anschluss von Gleich- und Wechselstromquellen und mit einem Modulausgang zum Anschluss einer Stromsenken sowie mit mindestens einem ersten Maximum-Power-Point-Steller (MPP-Steller), der zur Steuerung sowohl einer eingangsseitig eingespeisten Gleichspannung als auch einer eingangsseitig eingespeisten gleichgerichtete Wechselspannung zwischen einem Hochsetzstellermodus und einem Choppermodus umschaltbar ist. Die Umschaltung zwischen dem Hochsetzstellermodus und dem Choppermodus erfolgt mittels einer Steuereinheit, die zudem eine Wechselrichterstufe steuert, welche die eingespeiste Gleichspannung in eine Wechselspannung umsetzt.

Gemäß einer zweckmäßigen Weiterbildung weist der MPP-Steller sowohl eine Hochsetzstellerschaltung mit einem Halbleiterschalter und mit einer Induktivität als auch eine Chopperschaltung mit einem ohmschen Widerstand sowie einen ansteuerbaren Schalter zur Umschaltung zwischen dem Choppermodus und dem Hochsetzstellermodus auf. Damit können die verschiedenen Eingangsspannungsarten und deren Kennlinien in dem MPP-Steller verarbeitet und eine konstante geregelte Spannung für den nachfolgenden Wechselrichtermodul bereitgestellt werden. Zudem wird eine externe Chopperbeschaltung vermieden und somit Bauraum eingespart.

Vorzugsweise ist dem Halbleiterschalter im Hochsetzstellermodus eine Induktivität und im Choppermodus der ohmsche Widerstand vorgeschaltet. Dadurch kann der MPP-Steller einerseits im Hochsetzstellermodus und andererseits im Choppermodus arbeiten, um überschüssige, Energie über den ohmschen Widerstand abzuführen. Der Choppermodus dient insbesondere zum Schutz des dem MPP-Steller nachgeordneten Wechselrichters (Wechselrichterstufe), insbesondere wenn bei eingangsseitig angeschlossener, generatorisch arbeitender Wind- oder Wasserkraftanlage im Falle eines Netzabwurfs die Spannung am MPP-Steller sprungartig und/oder auf hohe Spannungswerte ansteigt.

Vorzugsweise ist zwischen dem Eingangsfilter und dem MPP-Steller eine Kapazität angeordnet. Dadurch ist eine Glättungsmöglichkeit der Eingangsspannung geschaffen. Änderungen in der Eingangsspannung oder in der Belastung können kurzfristig durch die Kapazität ausgeglichen werden.

Vorzugsweise ist auch zwischen dem MPP-Steller und dem Wechselrichtermodul eine Kapazität angeordnet. Damit ist eine Glättungsmöglichkeit der geregelten Spannung am Ausgang des MPP-Stellers geschaffen. Änderungen in der geregelten Spannung oder in der Belastung durch den Wechselspannungsrichter können kurzfristig durch die Kapazität ausgeglichen werden.

Gemäß einer vorteilhaften Weiterbildung weist das Umrichtermodul wenigsten einen weiteren Eingangsfilter auf. Darüber hinaus ist zwischen wenigstens einem weiteren MPP-Steller und dem weiteren Eingangsfilter eine weitere Kapazität vorgesehen, welche eine geglättete Eingangsspannung bereitstellt.

Vorzugsweise erfolgt die Energieversorgung der Steuereinheit über eine der Wechselrichterstufe gleichstromseitig vorgeordnete erste Diode und/oder über eine der Wechselrichterstufe wechselstromseitig nachgeordnete zweite Diode. Somit ist es möglich, die Steuereinheit bei ausreichender Sonneneinstrahlung, insbesondere tagsüber, über eine eingangsseitig angeschlossene PV-Anlage (PV-Array) und bei nicht ausreichender Sonnenstrahlung, beispielsweise nachts oder bei starker Bewölkung, über das ausgangsseitig angeschlossene Energieverteilungsnetz (öffentliches Stromverteilnetz) zu versorgen.

Gemäß einer vorteilhaften Weiterbildung ist mindestens ein dritter Maximum-Power-Point Steller dem Wechselrichter vorgeschaltet. Damit kann gleichzeitig zu einem Wind- oder Wasserkraftgenerator auch eine PV-Anlage an das Umrichtermodul angeschlossen werden.

In einer geeigneten Ausführungsform ist das Umrichtermodul eingangsseitig zum Anschluss mindestens einer Batterie, mindestens einer PV-Anlage, mindestens einer Wind- oder Wasserkraftgeneratoranlage und ausgangsseitig zum Anschluss insbesondere an ein öffentliches Stromverteilnetz und/oder an eine Batterie vorgesehen und eingerichtet.

Nachfolgend werden Ausführungsbeispiele der Erfindung anhand einer Zeichnung näher erläutert, darin zeigen:
- FIG 1: ein Blockdiagramm eines Umrichters mit einem zwischen zwei Modi umschaltbaren MPP-Steller, und
- FIG 2: eine elektronische Schaltung des umschaltbaren MPP-Stellers.

In einer Photovoltaikanlagen (PV-Anlage) liefern PV-Felder mit in Reihenschaltung und Parallelschaltung angeordneten Solarmodulen quasi als Generator direkt eine Gleichspannung, während Wind- und Wasserkraftanlagen aus drehenden Generatoren eine Wechselspannung erzeugen. Zusätzlich zu der unterschiedlichen Spannungsart weisen PV-Felder eine andere Leistungskennlinie als drehende Generatoren auf.

PV-Felder zeigen einen von der Substrat-Temperatur und der Einstrahlungsintensität des Sonnenlichtes abhängigen und veränderlichen Punkt, an dem die Leistungsabgabe am größten ist. Dieser Punkt wird als MPP (Maximum Power Point) bezeichnet. Je größer der durch die Solarfelder fließende Strom bei gleichen Bedingungen ist, umso kleiner ist die abgebende Gleichspannung.

Im Gegensatz dazu steigen bei einem drehendem Wind- oder Wasserkraftgenerator die Wechselspannungshöhe und die Leistungsabgabe mit zunehmender Generator-Drehzahl an.

Generatoren für Windkraft und Wasserkraft weisen einen Rotor und einen mit Spulen mit definierten Induktivitäten bewickelten Stator auf. Dreht sich ein magnetisch wirksamer Rotor gegenüber dem Stator des Generators, so wird eine Spannung in der äußeren Statorwicklung induziert. Wird die Statorwicklung elektrisch belastet, so fließt z. B. ein sinusförmiger Strom durch diese Wicklung. Unterschiedliche Drehzahlen haben einen großen Einfluss auf die Höhe der Ausgangsspannung. Ebenso ist der Unterschied der Spannungshöhe zwischen einer belasteten und einer unbelasteten Wicklung erheblich.

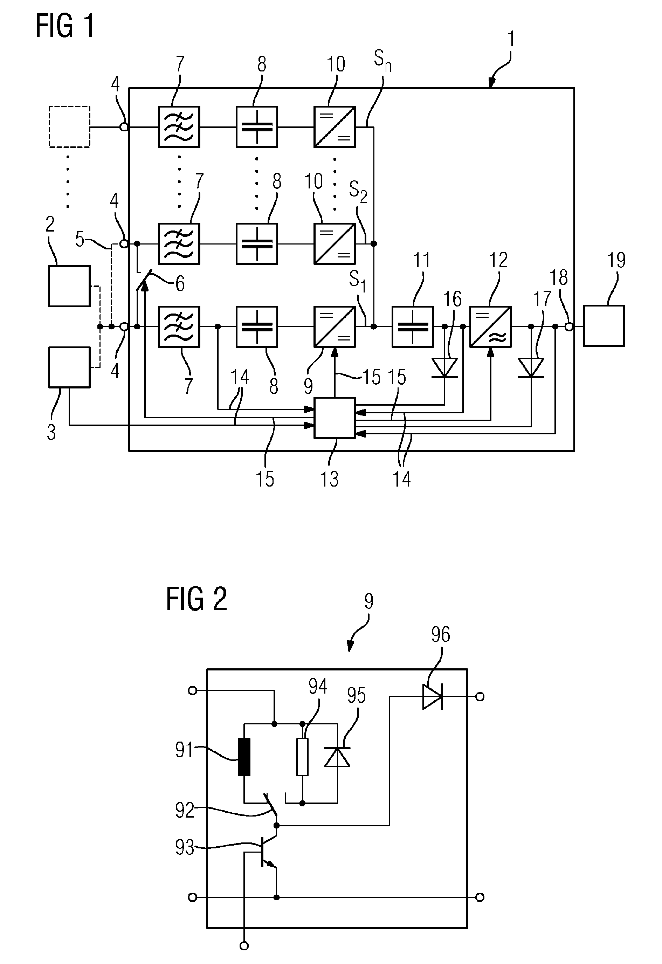

In dem in FIG 1 dargestellten Blockdiagramm eines Umrichtermoduls 1 repräsentiert ein Block 2 eine Gleichspannungsquelle, insbesondere eine PV-Anlage oder ein einzelnes PV-Feld. Ein Block 3 repräsentiert eine Wechselspannungsquelle, wie z. B. eine Wind- oder Wasserkraftgeneratoranlage, welche alternativ an einen Moduleingang oder -anschluss 4 des Umrichtermoduls 1 angeschlossen werden können. Block 3 beinhaltet zusätzlich zu dem Generator auch einen (Dioden-)Gleichrichter, welcher die von dem mit Wind- oder Wasserkraft betriebenen Generator erzeugte Wechselspannung in eine Gleichspannung umwandelt.

Das Umrichtermodul 1 weist mehrere Eingänge 4 zum Anschluss von Gleichspannungsquellen 2 oder Wechselspannungsquellen 3 auf. Die Moduleingänge 4 sind auch über eine Brücke 5 verbindbar, die im Falle des Anschlusses einer Wechselspannungsquelle 3 gesetzt werden sollte. Ein solcher Moduleingang 4 des Umrichtermoduls 1 dient somit zur Einspeisung einer Gleichspannung oder einer gleichgerichteten Wechselspannung, wobei im Falle einer eingespeisten gleichgerichteten Wechselspannung zwei Moduleingänge 4 belegt sind. Es steht auch mindestens ein weiterer Moduleingang 4 bereit, an den eine weitere Gleichspannungsquelle 2 angeschlossen werden kann. So können gleichzeitig auch mehrere gleichartige oder unterschiedliche Energiequellen 2, 3 an die Eingänge oder Moduleingänge 4 des Umrichtermoduls 1 angeschlossen sein.

Alternativ zur Verbindung der Moduleingänge 4 mittels einer Brücke 5 kann auch umrichtermodulintern ein Schalter 6 vorgesehen sein, welcher die Überbrückungsfunktion intern übernimmt. Diese Überbrückungsfunktion ist bevorzugt zu realisieren, wenn ein gleichgerichteter Wechselstrom aus einer Wechselspannungsquelle 3 an einem der Eingangsanschlüsse 4 eingespeist wird.

Das Umrichtermodul 1 weist mehrere Stränge S₁, S₂ bis Sₙ mit jeweils einem Eingangsfilter 7, einer Kapazität 8 und einem Maximum-Power-Point-(MPP-)Steller 9, 10 auf. Dabei ist ein erster Strang S₁ mit einem MPP-Steller 9 ausgestattet, der zusätzlich zu einem Hochsetzstellermodus auch eine sogenannte Chopperschaltung realisiert. Die anderen MPP-Steller 10 arbeiten bevorzugt lediglich als Hochsetzsteller unter Berücksichtigung der Kennlinien einer PV-Anlage 2 bzw. der Generatorkennlinien einer Wind- oder Wasserkraftanlage als Wechselspannungsquelle 3.

Jeder der Stränge S₁, S₂, Sₙ erhält eine Eingangsspannung, welche an einem oder mehreren der Moduleingänge 4 bereit gestellt ist. Die Eingangsspannung wird durch den Eingangsfilter 7 von unerwünschten Oberschwingungen und hochfrequenten Signalanteilen befreit. Die durch den Eingangsfilter 7 geglättete Spannung lädt die Kapazität 8 in Form eines oder mehrerer Kondensatoren auf. Die geglättete Ausgangsspannung der Kapazität 8 wird in den MPP-Steller 9, 10 gespeist, der die an diesem anliegende Spannung bzw. den Strom auf den Maximum-Power-Point im Falle einer PV-Anlage oder mit Hilfe einer Leistungskennlinie des am Eingang angeschlossenen Generators einer Wechselspannungsquelle regelt.

Dem MPP-Steller 9, 10 ist ein Kapazität 11 in Form eines oder mehrerer Kondensatoren nachgeschaltet, welche zusammen mit dem MPP-Steller 9, 10 wirkt und die geregelte Spannung als weiteres Energiereservoir glättet sowie dieses den nachfolgenden Kreisen bereitstellt. Ein dem MPP-Steller 9, 10 nachgeordneter Wechselrichter 12 richtet die in diesen eingespeiste Gleichspannung in eine Wechselspannung zur Einspeisung in ein Netz um.

Treten unerwünschte Spannungsspitzen auf, kann der MPP-Steller 9 in Strang S₁ die kurzfristige Überlastung durch eine interne Schaltung (Chopperbeschaltung) abfangen und somit nachfolgende Bauteile vor Überspannung und Überbeanspruchung schützen. Umrichtermodulintern können mehrere Stränge S₁, S₂, Sₙ mit Eingangsfilter 7, Kapazität 8 und MPP-Steller 9, 10, korrespondierend zu der Anzahl der Moduleingänge 4 vorgesehen sein. Diese sind jeweils parallel der Kapazität 11 vorgeschaltet.

Eine Steuereinheit oder -einrichtung 13 in Form vorzugsweise eines Microcontrollers wertet Messungen, insbesondere vor und hinter dem Wechselrichter 12 sowie zwischen dem Eingangsfilter 7 und der Kapazität 8 vorgenommene Strom- und/oder Spannungsmessungen, aus. Entsprechende Messwerte werden über Messleitungen 14 an die Steuereinheit 13 geführt. Anhand der Messungen bzw. Messwerte steuert die Steuereinheit 13 über Steuerleitungen 15 in den relevanten Blöcken 9, 10 und 12 vorgesehene Schalter und/oder Transistoren. Zusätzlich dazu steuert die Steuereinheit 13 auch den Umschalter 6, welcher in Schließstellung zwei Stränge S₁ und S₂ mit Eingangsfilter 7, Kapazität 8, MPP-Steller 9 bzw. Eingangsfilter 7, Kapazität 8 und MPP-Steller 10 eingangsseitig parallel schaltet und beispielsweise eine PV-Anlage und/oder eine Wind-/Wasserkraftanlage an das Umrichtermodul 1 anschließt.

Zur Spannungsversorgung der Steuereinheit 13 sind Dioden 16 und 17 vorgesehen, die gleich- bzw. wechselstromseitig an den Wechselrichter 12 angeschlossen sind. Insbesondere tagsüber kann somit die Steuereinheit 13 mittels der gelieferten Energie z. B. einer angeschlossenen PV-Anlage über die Diode 16 gespeist werden. Liefert die PV-Anlage beispielsweise Nachts oder bei starker Bewölkung keine ausreichende Energie, so kann die Steuereinheit 13 von einem ausgangsseitig mit einem Modulausgang oder -anschluss 18 des Umrichtermoduls 1 verbundenen Energieverteilungs- oder Versorgungsnetz 19 über die Diode 17 je nach Betriebsart versorgt werden.

Letztlich wird die aufbereitete und wechselgerichtete Gleichspannung am Modulausgang 18 des Umrichtermoduls 1 zur Verfügung gestellt und kann in das Energieverteilungsnetz 19 eingespeist werden.

FIG 2 zeigt eine bevorzugte Schaltung des MPP-Stellers 9. Der MPP-Steller 9 weist eine Induktivität 91 auf, welche einerseits mit einem Anschluss an den hochpotentialseitigen Anschluss der durch die Kapazität 8 geglätteten Eingangsspannung des Umrichtermoduls 1 angeschlossen ist. Andererseits kann die Induktivität 91 mit deren zweiten Anschluss selektiv über einen Schalter 92 an den Kollektor-Anschluss eines Transistors 93 geschaltet werden. Der Transistor 93 ist jeweils mit seinem Basis- und Emitter-Anschluss an den niederpotentialseitigen Anschluss der geglätteten Spannung der Kapazität 8 angeschlossen.

Eine Parallelschaltung eines Widerstandes 94 und einer Diode 95 ist ebenfalls an den hochpotentialseitigen Anschluss der geglätteten Spannung der Glättungskapazität 8 angeschlossen. Der kathodenseitige N-Anschluss der Diode 95 ist dabei an dem hochpotentialseitigen Anschluss der Parallelschaltung aus Diode 95 und Widerstand 94 angeschlossen. Der anodenseitige P-Anschluss der Diode 95 ist an dem niederpotentialseitigen Anschluss der Parallelschaltung aus Diode 95 und Widerstand 94 angeschlossen.

Der Schalter 92 kann den Kollektor-Anschluss des Transistors 93 selektiv entweder an den niederpotentialseitigen Anschluss der Induktivität 91 oder an den niederpotentialseitigen Anschluss der Parallelschaltung aus Widerstand 94 und Diode 95 anschließen. Eine Diode 96 ist an den Kollektoranschluss des Transistors 95 mit deren P-Anschluss geschaltet. N- bzw. kathodenseitig bildet die Diode 96 den hochpotentialseitigen Ausgangsanschluss des MPP-Stellers 9. Der Emitteranschluss des Transistors 95 bildet den niederpotentialseitigen Ausgangsanschluss des MPP-Stellers 9.

In einer ersten Stellung, in der der Schalter 92 den Transistor 93 mit der Induktivität 91 verbindet, arbeitet der MPP-Steller 9 als Hochsetzsteller und kann die eingespeiste Leistung gemäß eines MPP-Stellers oder -Trackers regeln. D.h. der MPP-Steller 9 folgt dem Maximum Power Point (MPP) der eingangsseitig angeschlossenen PV-Anlage (PV-Feld oder PV-Array) und regelt seinen Arbeitspunkt entsprechend auf den MPP des gerade aktuellen Zustandes der PV-Anlage.

In einer zweiten Stellung, in welcher der Schalter 92 den Transistor 93 mit der Parallelschaltung aus Diode 95 und Widerstand 94 verbindet, arbeitet der MPP-Steller 9 als in einem Choppermodus als Chopperschaltung, in dem beispielsweise in Folge eines Netzabwurfes entstehende Überspannungen über den Widerstand 94 abgeleitet und somit die nachfolgenden Schaltungsteile gegen eine Überlastung geschützt werden.

Die Erfindung ist nicht auf die vorstehend beschriebene Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

## Patentansprüche

1. Umrichtermodul (1) mit mindestens einem Moduleingang (5) zum Anschluss einer Gleichstromquelle (2) oder einer Wechselstromquelle (3) und mit einem Modulausgang (18) zum Anschluss einer Stromsenke,
- mit mindestens einem ersten Maximum-Power-Point-Steller (9), der zur Steuerung sowohl einer eingangsseitig eingespeisten Gleichspannung als auch einer eingangsseitig eingespeisten gleichgerichtete Wechselspannung zwischen einem Hochsetzstellermodus und einem Choppermodus umschaltbar ist,
- mit einer Wechselrichterstufe (12), welche die eingespeiste Gleichspannung in eine Wechselspannung umsetzt, und
- mit einer Steuereinheit (13) zur Steuerung der Wechselrichterstufe (12) und des Maximum-Power-Point-Stellers (9).

2. Umrichtermodul (1) nach Anspruch 1,
**dadurch gekennzeichnet, dass** der Maximum-Power-Point-Steller (9) sowohl eine Hochsetzstellerschaltung mit einem Halbleiterschalter (93) und mit einer Induktivität (91) als auch eine Chopperschaltung mit einem ohmschen Widerstand (94) sowie einen ansteuerbaren Schalter (92) zur Umschaltung zwischen dem Choppermodus und dem Hochsetzstellermodus umfasst.

3. Umrichtermodul (1) nach Anspruch 2,
**dadurch gekennzeichnet, dass** dem Halbleiterschalter (93) im Hochsetzstellermodus die Induktivität (91) und im Choppermodus der ohmsche Widerstand (94) vorgeschaltet ist.

4. Umrichtermodul (1) nach einem der Ansprüche 1 bis 3,
**gekennzeichnet durch** mindestens einen zweiten Maximum-Power-Point-Steller (10), der eingangsseitig dem ersten Maximum-Power-Point-Steller (9) mittels einer Brücke (5) oder über einem Schalter (6) parallel geschaltet ist

5. Umrichtermodul (1) nach einem der Ansprüche 1 bis 4,
**dadurch gekennzeichnet, dass** dem oder jedem Maximum-Power-Point-Steller (9, 10) über eine Kapazität (8) ein Eingangsfilter (7) zur Filterung des Eingangssignals vorgeschaltet angeordnet ist.

6. Umrichtermodul (1) nach einem der Ansprüche 1 bis 5,
**dadurch gekennzeichnet, dass** der Wechselrichterstufe (12) eine Kapazität (11) vorgeschaltet ist.

7. Umrichtermodul (1) nach einem der Ansprüche 1 bis 6,
**dadurch gekennzeichnet, dass** die Energieversorgung der Steuereinheit (13) über eine der Wechselrichterstufe (12) gleichstromseitig vorgeordnete erste Diode (16) und/oder über eine der Wechselrichterstufe (12) wechselstromseitig nachgeordnete zweite Diode (17) erfolgt.

8. Umrichtermodul (1) nach einem der Ansprüche 1 bis 7,
**dadurch gekennzeichnet, dass** der dem Wechselrichter (12) vorgeschalteten Kapazität (11) mindestens ein dritter Maximum-Power-Point-Steller (10) vorgeschaltet ist.

9. Umrichtermodul (1) nach einem der Ansprüche 1 bis 8, das eingangsseitig zum Anschluss mindestens einer Batterie, mindestens einer Photovoltaikanlage (2), mindestens einer Wind- oder Wasserkraftgeneratoranlage (3) und/oder eines Energieverteilnetzes (19) vorgesehen und eingerichtet ist.

10. Umrichtermodul (1) nach einem der Ansprüche 1 bis 9, die ausgangsseitig für den Anschluss an ein Energieverteilungsnetz (19), insbesondere an ein öffentliches Stromverteilungsnetz, und/oder an eine Batterie vorgesehen und eingerichtet ist.
